# EUROPEAN PATENT SPECIFICATION

(11) **EP 1 003 179 B1**
(45) Date of publication and mention of the grant of the patent: **25.08.2004**
(21) Application number: 99203545.1
(22) Date of filing: 27.10.1999
(51) Int. Cl.: H01B 1/12, H05B 33/28

(54) **A method for preparing a conductive polythiophene layer at low temperature**
Verfahren zur Herstellung einer Schicht aus leitfähigen Polythiophen bei neidriger Temperatur
Procédé de préparation d'une couche de polythiophène conductif à basse température

(30) Priority: 17.11.1998 EP 98203951; 21.12.1998 EP 98204382
(43) Date of publication of application: 24.05.2000
(73) Proprietor: AGFA-GEVAERT, 2640 Mortsel (BE)
(72) Inventor: Cloots, Tom, 2640 Mortsel (BE); Loccufier, Johan, 2640 Mortsel (BE); Louwet, Frank, 2640 Mortsel (BE); Andriessen, Ronn, 2640 Mortsel (BE)

(56) References cited:
- EP-A- 0 440 957
- EP-A- 0 564 911
- EP-A- 0 686 662
- EP-A- 0 767 009
- EP-A- 0 803 886
- EP-A- 0 825 219
- WO-A-98/25274
- CHEMICAL ABSTRACTS, vol. 129, no. 21, 23 November 1998 (1998-11-23) Columbus, Ohio, US; abstract no. 277126, SHIM, MYUN-KI ET AL: "Transparent electric conductive composition, formation and manufacture of transparent electric conductive membrane from the same" XP002098408 & JP 10 251518 A (SAMSUNG ELECTRON DEVICES CO., LTD., S. KOREA)

## Description

### FIELD OF THE INVENTION

This invention relates to a method for producing a polymeric conductive layer on an object. This invention relates especially to a method for producing a polymeric conductive layer of polythiophene and derivatives.

### BACKGROUND OF THE INVENTION

The production and the use of electronically conducive polymers are well known in the art. In **DE-A-41 32 614** the production of film-forming, electronically conductive polymers by anodic oxidation of pyrroles, thiophenes, furans or aromatic amines (or their derivatives.) is effected with a sulphone compound present in the electrolyte solution. In **US-A-5 254 648** the preparation of electrically-conducting polythiophenes are described. In **US-A-5 236 627** a method for the preparation of polypyrrole is described. There are several uses for such polymers, they can be used as electrodes in capacitors, as disclosed in, e.g., **EP-A-803 886**, they are useful as a replacement for metal conductors in electrostatic discharge elimination and electromagnetic shielding as disclosed in, e.g., **WO-A-96/266355**. The layers of electrically-conductive polymers can be shaped into "wires" or channels using conventional photolithographic techniques and can then be used as interconnects for microchip fabrication, in devices requiring controlled resistance of resistive "channels", in non-linear optics, etc. Such shaping of electrically-conductive polymers into "wires" or channels has been disclosed in **US-A-5 561 030**. Also in **WO-A-97/18944** methods for patterning electrically-conductive polymer layers are disclosed.

Many of the electrically conductive polymers can not be applied to an object from an aqueous solution but have to be applied from a composition with organic solvents, e.g. polyaniline is frequently processed from solutions in cresol . In the light of ecological needs, the need to use organic solvents is a drawback and can hamper the widespread use of electrically conductive polymers. In **EP-A-440 957** a method for preparing polythiophene in an aqueous environment and applying polythiophene from an aqueous solution has been described. Such a solution is up until now mostly be used in photographic materials as disclosed in, e.g., **US-A-5 312 681**, **US-A-5 354 613** and **US-A-5 391 472**.

An other limiting factor in the use of electrically-conducting polymers is the fact that, when the polymer is applied in an amount leading to good conductivity, the layers are frequently coloured, which is undesired when these polymer layers are to be used as transparent electrode in LCD or electroluminescent devices. Therefore much efforts have be done to increase the conductivity of the polymers without increasing the coloration so that thin, almost colourless layers of electrically-conductive polymers can be applied having high conductivity.

In **EP-A-686 662** it has been disclosed that layers of polythiophene coated from an aqueous composition could be made with high conductivity. Therefore the aqueous composition of the polythiophene comprises further a di- or polyhydroxy compound and after coating said composition and drying the layer, the layer has to be treated at temperatures between 150 and 250 °C in a separate production step. Although the layers disclosed in **EP-A-686 662** have a low resistivity of about 300 Ω/square and lower, there is still a need for a method wherein the low resistivity can be reached at lower temperature and without the need of a separate annealing step.

### OBJECTS AND SUMMARY OF THE INVENTION

It is an object of the invention to provide a method for producing highly conductive layers of electrically-conducting polymers on an object without needing an additional annealing step at elevated temperatures.

It is an other object of the invention to provide an aqueous composition of an electrically conductive polymer that can be used to provide a highly conductive layer on an object.

It is a further object of the invention to provide a polymeric film carrying a highly conductive layer of an electrically conductive polymer, which can be used as electrodes in displays, e.g., LCD's, electroluminescent devices, capacitors, etc.

The objects of this invention are realised by providing a method for producing a polymeric conductive layer on an object comprising the steps of :
- providing an aqueous composition containing :
   a polythiophene,
   a polyanion compound and
   an aprotic compound with a dielectric constant, ε, ≥ 15,
- applying said composition to said object forming a layer and drying said layer to form a conductive polymeric layer on said object, characterised in that said object and said layer are kept at a temperature below 100 °C and said conductive polymeric layer has a resistivity of at most 2 kΩ/square.
   Preferably said polythiophene has formula 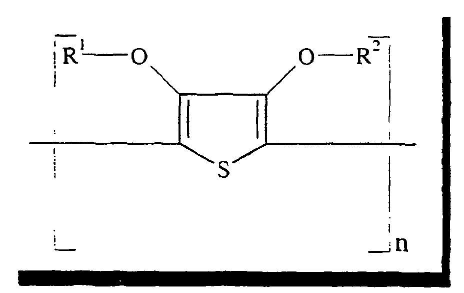 in which, each of R¹ and R² independently represents hydrogen or a C1-4 alkyl group or together represent an optionally substituted C1-4 alkylene group or a cycloalkylene group, preferably an ethylene group, an optionally alkyl-substituted methylene group, an optionally C1-12 alkyl- or phenyl-substituted 1,2-ethylene group, a 1,3-propylene group or a 1,2-cyclohexylene group,
   The objects of the invention are further realised by providing an aqueous composition containing :
   - a polythiophene with formula 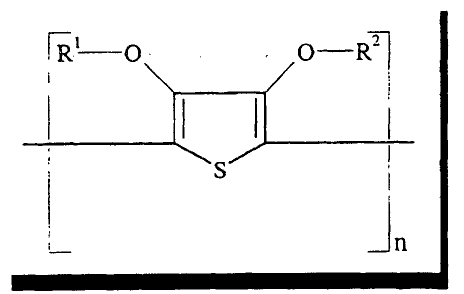 in which, each of R¹ and R² independently represents hydrogen or a C1-4 alkyl group or together represent an optionally substituted C1-4 alkylene group or a cycloalkylene group, preferably an ethylene group, an optionally alkyl-substituted methylene group, an optionally C1-12 alkyl- or phenyl-substituted 1,2-ethylene group, a 1,3-propylene group or a 1,2-cyclohexylene group,
   - a polyanion compound and
   - an aprotic compound with dielectric constant, ε, ≥ 15 selected from the group consisting of sulphones, sulphoxides, organic phosphates esters, organic phosphonates, organic phosphamides, urea, derivatives of urea and mixtures thereof.

### DETAILED DESCRIPTION OF THE INVENTION

It was found after experimentation that the annealing step, necessary to enhance the conductivity of a layer containing polythiophene and a di- or polyhydroxy compound could be omitted. When instead of such a di- or polyhydroxy compound, an aprotic compound (in this document aprotic is used to indicate compounds not carrying hydroxyl or carboxyl groups) with a dielectric constant, ε ≥ 15 was used, a layer of polythiophene applied to an object having a resistivity of lower than 2 kΩ/square could be prepared by applying an aqueous composition with a polythiophene and said aprotic compound (Further on Compound A) to the object and simply drying it at a temperature lower than 100 °C, or more preferably below 90 °C. Even when the drying proceeded at a temperature lower than 50 °C a very low resistivity could be achieved. It was possible to prepare layers with a resistivity below 500 Ω/square by simply drying the layer at a temperature lower than 50 °C. Thus no special, separate annealing step was necessary which is advantageous since it simplifies the production process of polymeric conductive layers and makes it both less expensive and more ecological since, in the method of this invention, less calories have to be used to form the conductive layer. Furthermore the absence of an annealing step at high temperature makes it possible to use the method of this invention for applying conductive layers on stretched polymeric films, e.g. stretched polyester, that risk to shrink and curl when treated at temperatures above 120 or 150 °C. Thus the method of this invention can also be used for applying conductive polymer layers on non-heat stable polymeric objects.

All resistivities in this document are measured according to the following method : A strip of the substrate coated with the conductive polymer is taken. This strip has a length of 27.5 cm and a width of 35 mm. Over the width of the strip electrodes are applied at a distance of 10 cm of each other. The electrodes are made of a conductive polymer, ECCOCOAT CC-2 available from Emerson & Cumming Speciality polymers. Over said electrode a constant potential of 1 V is applied. The current flowing through the circuit is measured on a Pico-amperemeter KEITHLEY 485. From the potential and the current, taking in account the geometry of the measurement, the resistivity in Ω/square is calculated. Preferably the compound A is an aprotic solvent selected from the group of lactams, amides, sulphones, sulphoxides, organic phosphates esters, organic phosphonates, organic phosphamides, urea, derivatives of urea and mixtures thereof. Typical useful compounds A are e.g. N-methyl-2-pyrrolidone, 2 pyrrolidone, 1,3-dimethyl-2-imidazolidone, N,N,N',N'-tetramethylurea, formamide, dimethylformamide, N,N-dimethylacetamide, tetramethylene sulphone, dimethylsulfoxide, hexamethylphosphamide, etc.

Although polythiophene made by polymerisation of any thiophene derivative, non-substituted or substitute can be used in the method of this invention, the polythiophene had preferably the formula 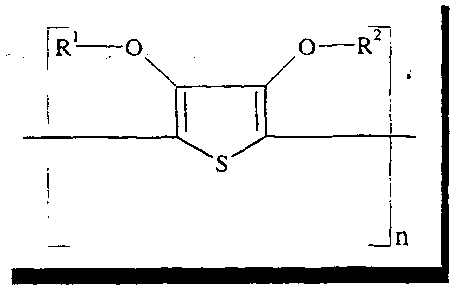 in which, each of R¹ and R² independently represents hydrogen or a C1-4 alkyl group or together represent an optionally substituted C1-4 alkylene group or a cycloalkylene group, preferably an ethylene group, an optionally alkyl-substituted methylene group, an optionally C1-12 alkyl- or phenyl-substituted 1,2-ethylene group, a 1,3-propylene group or a 1,2-cyclohexylene group. More preferably a polythiophene wherein R¹ and R² form together a - CH₂-CH₂- group is used. The preparation of such a polythiophene and of aqueous polythiophene polymeric polyanion dispersions containing said polythiophene is described in EP-A-440 957 and corresponding US-A-5,300,575. Basically the preparation of said polythiophene proceeds in the presence of said polymeric polyanion compounds by oxidative polymerisation of 3,4-dialkoxythiophenes or 3,4-alkylenedioxythiophenes according to the following formula (II) 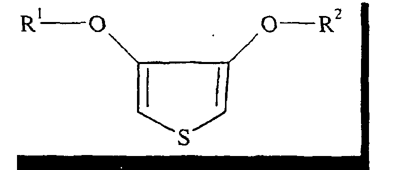 wherein :
R¹ and R² are as defined above, with oxidising agents typically used for the oxidative polymerisation of pyrrole and/or with oxygen or air in the presence of said polyacids, preferably in aqueous medium containing optionally a certain amount of organic solvents, at temperatures of 0 to 100°C.

The polythiophenes get positive charges by the oxidative polymerisation, the location and number of said charges is not determinable with certainty and therefore they are not mentioned in the general formula of the repeating units of the polythiophene polymer.

When using air or oxygen as the oxidising agent their introduction proceeds into a solution containing thiophene, polyacid, and optionally catalytic quantities of metal salts till the polymerisation is complete.

Oxidising agents suitable for the oxidative polymerisation of pyrrole are described, for example, in J. Am. Soc. 85, 454 (1963). Inexpensive and easy-to-handle oxidising agents are preferred such as iron(III) salts, e.g. FeCl₃, Fe(ClO₄)₃ and the iron(III) salts of organic acids and inorganic acids containing organic residues, likewise H₂O₂, K₂Cr₂O₇, alkali or ammonium persulfates, alkali perborates, potassium permanganate and copper salts such as copper tetrafluoroborate.

Theoretically, 2.25 equivalents of oxidising agent per mol of thiophene are required for the oxidative polymerisation thereof [ref. J. Polym. Sci. Part A, Polymer Chemistry, Vol. 26, p.1287 (1988)]. In practice, however, the oxidising agent is used in a certain excess, for example, in excess of 0.1 to 2 equivalents per mol of thiophene.

For the polymerisation, the thiophenes corresponding to the formula above, a polyacid and oxidising agent are dissolved or emulsified in an organic solvent or preferably in water and the resulting solution or emulsion is stirred at the envisaged polymerisation temperature until the polymerisation reaction is completed. By that technique stable aqueous polythiophene dispersions are obtained having a solids content of 0.05 to 55% by weight and preferably of 0.1 to 10% by weight.

The aqueous composition contains preferably between 0.1 and 49 % by weight of said compound A, with respect to the total weight of the composition. More preferably it contains between 1 and 20 % by weight of compound A, with respect to the total weight of the composition.

The aqueous composition used in the method of this invention can also comprise one or more binders and one of more surfactants. Also other ingredients, e.g., spacing particles, UV-filters, IR-absorbers, etc. Can be added to the aqueous composition when the final use of the conductive polymeric layer needs the presence of such an ingredient.

The aqueous composition is preferably applied to said object in such an amount that in the dried layer between 10 and 5000 mg polythiophene is present per m², preferably the dried layer comprises between 100 and 500 mg of polythiophene per m².

The aqueous composition can be applied to any object needing a conductive layer, the object can be flat, e.g. a polymeric film, or having a three-dimensional shape, e.g. polymeric bottles, polymeric parts of batteries, etc.

The aqueous composition according to this invention can most beneficially be used for applying a conductive coating to a flat substrate. These substrates can be inorganic or organic. Typical polymeric films that can be used are films made from, e.g., polyester (polyethyleneterephthalate, polyethlenenaphthalate, etc.), polystyrene, polycarbonate, polyacrylate, polyamide, polyimides, cellulosetriacetate, polyolefines, polyvinylchloride, etc. Also inorganic substrates can be coated with an aqueous composition containing polythiophene, a polyanion and compound A, suitable substrate are, e.g., Si, ceramics, oxides, e.g., Indium-Tin oxide, glass, polymeric film reinforced glass, flexible glass/polymeric film laminates, etc.. The latter is a very good support for the conductive layer made according to the method of this invention, since such a material can be very thin ( even in the order of 10 to 400 µm) and still give both the dimensional stability of glass and the flexibility of the polymeric film. When using layers made of aqueous composition containing polythiophene, a polyanion and compound A for use as transparent electrode in Displays, e.g., LCD's and electroluminescent devices, the use of polymeric film reinforced glass as support for the electrode is very useful. In the method of this invention, the aqueous composition can be

applied to the object by any means known in the art : it can be spin-coated, sprayed on the object, it can also be coated by any of the continuous coating techniques that are used to coat solutions on running webs, e.g. dip coating, rod coating, blade coating, air knife coating, gravure coating, reverse roll coating, extrusion coating, slide coating and curtain coating. An overview of these coating techniques can be found in the book "Modern Coating and Drying Technology", Edward Cohen and Edgar B. Gutoff Editors, VCH publishers, Inc, New York, NY, 1992. When the layer with low resistivity made by the method of this invention has to be covered by, e.g. a hole transport layer or a electron transport layer, it is possible to coat simultaneously multiple layers by coatings technique known as useful for the simultaneous coating of multiple layers as e.g. slide coating, curtain coating etc..

It is possible in the method of this invention to apply the aqueous composition to the substrate by printing techniques, e.g., ink-jet printing, gravure printing, flexo printing, offset printing etc. In this case the composition can be applied directly in the form of electrode patterns.

A layer applied to a substrate by a method according to this invention, can be patterned by using conventional photolithographic techniques as disclosed in, e.g., **US-A-5 561 030** and **WO-A-97/18944**.

Layers with low resistivity, made by the method according to this invention can be used in any application wherein thin electrodes, preferably transparent electrodes, on a substrate are used. Such uses include, amongst others, displays, e.g., LCD's, electroluminescent displays, LED's, etc..

The present invention encompasses also an aqueous composition containing :
a polythiophene
a polyanion compound and
an aprotic compound with dielectric constant, ε, ≥ 15 selected from the group consisting of sulphones, sulphoxides, organic phosphates esters, organic phosphonates, organic phosphamides, urea, derivatives of urea and mixtures thereof.
In such a composition, the polythiophene has preferably the formula 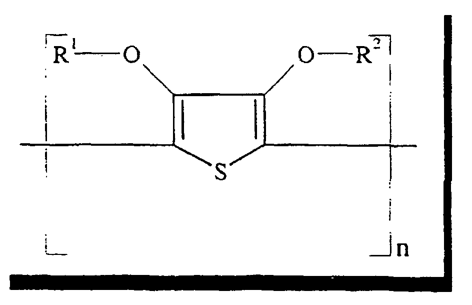 in which, each of R¹ and R² independently represents hydrogen or a C1-4 alkyl group or together represent an optionally substituted C1-4 alkylene group or a cycloalkylene group, preferably an ethylene group, an optionally alkyl-substituted methylene group, an optionally C1-12 alkyl- or phenyl-substituted 1,2-ethylene group, a 1,3-propylene group or a 1,2-cyclohexylene group,

### EXAMPLES

### 1 Preparation of the polythiophene dispersion (PT) (hereinafter called dispersion PT)

a) Into 1000 ml of an aqueous solution of 14 g of polystyrene sulphonic acid (218 mmol of SO₃H groups) with number-average molecular weight (Mn) 40,000, were introduced 12.9 g of potassium peroxodisulfate (K₂S₂O₈), 0.1 g of Fe₂(SO₄)₃ and 5.68 g of 3,4-ethylenedioxy-thiophene. The thus obtained reaction mixture was stirred for 24 h at 20 °C and subjected to desalting.
b) 500 ml of the above prepared reaction mixture were diluted with 500 ml of water and stirred for 6 hours at room temperature in the presence of a granulated weak basic ion exchange resin LEWATIT H 600 (trade name of Bayer AG, Leverkusen, Germany) and strongly acidic ion exchanger LEWATIT S 100 (trade name of Bayer AG, Leverkusen, Germany). After said treatment the ion exchange resins were filtered off and the potassium ion and sulphate ion content were measured which were respectively 0.4 g K⁺ and 0.1 g (SO₄)²⁻ per litre.

### EXAMPLE 1

417 ml of dispersion PT and 50 g of methylpyrrolidone (compound A) were mixed with a binder (8.5 ml of a 30 % dispersion of co(vinylidenechloride/methylacrylate/itaconic acid 88/10/2) and a surfactant (0.5 ml of FLUORAD FC430, trade name of 3M) and the mixture was brought to 1000 ml with distilled water.

This mixture was coated on a 100 µm thick polyethyleneterephthalate film whereon a subbing layer (as usual on supports for photographic material) was present. The mixture was coated at a wet thickness of 40 mµ, and dried under the conditions indicated in Table 1. The dried layer contained 200 mg/m² of polythiophene. The values of resistivity, listed in Table 1, were measured as described above. The net optical density of the layer was between 0.08 and 0.10 for all samples.

**Table 1**

| Drying time (sec) | Drying temperature (°C) | Resistivity (Ω/square) |
|---|---|---|
| 1 | 30 | (sample was not dry) |
| 1 | 50 | 990 |
| 1 | 90 | 1000 |
| 1 | 120 | 1000 |
| 2 | 30 | 840 |
| 2 | 50 | 960 |
| 2 | 90 | 1000 |
| 2 | 120 | 1100 |
| 4 | 30 | 770 |
| 4 | 50 | 1200 |
| 4 | 90 | 1300 |
| 4 | 120 | 1300 |

### EXAMPLE 2

Example 1 was repeated except that the mixture was coated at a wet thickness of 100 mµ. The layer was dried at a temperature of 35 °C during 4 seconds and contained 500 mg/m² of polythiophene.

The resistivity in Ω/square was measured as described above and was 330 Ω/square.

### EXAMPLE 3

Example 1 was repeated except that 1,3-dimethyl-2-imidazolidinone was used instead of N-methylpyrrolidone. The layer was dried at a temperature of 35 °C during 4 seconds. The resistivity in Ω/square was measured as described above and was 800 Ω/square.

### EXAMPLE 4

Example 1 was repeated except that 2-pyrrolidone was used instead of N-methylpyrrolidone. The layer was dried at a temperature of 35 °C during 4 seconds. The resistivity in Ω/square was measured as described above and was 700 Ω/square.

### EXAMPLE 5

Example 1 was repeated except that N,N,N',N'- tetramethylurea was used instead of N-methylpyrrolidone. The layer was dried at a temperature of 35 °C during 4 seconds. The resistivity in Ω/square was measured as described above and was 1900 Ω/square.

### EXAMPLE 6

Example 1 was repeated except that formamide was used instead of N-methylpyrrolidone. The layer was dried at a temperature of 35 °C during 4 seconds. The resistivity in Ω/square was measured as described above and was 750 Ω/square.

### EXAMPLE 7

Example 1 was repeated except that tetramethylenesulphone was used instead of N-methylpyrrolidone. The layer was dried at a temperature of 35 °C during 4 seconds. The resistivity in Ω/square was measured as described above and was 1500 Ω/square.

### EXAMPLE 8

Example 1 was repeated except that N,N-dimethylacetamide was used instead of N-methylpyrrolidone. The layer was dried at a temperature of 35 °C during 4 seconds. The resistivity in Ω/square was measured as described above and was 1000 Ω/square.

### COMPARATIVE EXAMPLE

Example 1 was repeated, but instead of compound A, 22.5 mg of sorbitol was added. The layer was dried at a temperature of 35 °C during 4 seconds. The resistivity was > 10⁶ Ω/square. Only after annealing at 200 °C for 90 sec, a resistivity of 1000 Ω/square was reached.

It is clear that in the method of this invention the annealing step can be omitted and still a very low resistivity can be reached.

## Claims

1. A method for producing a polymeric conductive layer on an object comprising the steps of :
- providing an aqueous composition containing
a polythiophene,
a polyanion compound and
an aprotic compound with a dielectric constant, ε, ≥ 15;
- applying said composition to said object forming a layer; and
- drying said layer to form a conductive polymeric layer on said object,
**characterised in that** said object and said layer are kept at a temperature below 100 °C and said conductive polymeric layer has a resistivity of at most 2 kΩ/square.

2. A method according to claim 1, wherein said polythiophene has the following formula : 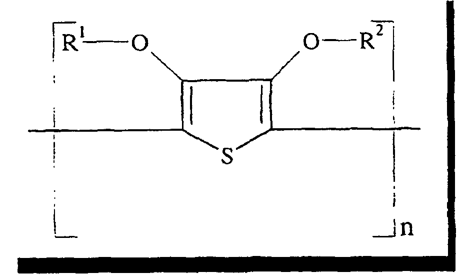 wherein each of R¹ and R² independently represents hydrogen or a C1-4 alkyl group or together represent an optionally substituted C1-4 alkylene group or a cycloalkylene group, preferably an ethylene group, an optionally alkyl-substituted methylene group, an optionally C1-12 alkyl- or phenyl-substituted 1,2-ethylene group, a 1,3-propylene group or a 1,2-cyclohexylene group.

3. A method according to claim 1 or 2, wherein said object and said layer are kept at a temperature below 50 °C.

4. A method according to any of claims 1 to 3, wherein, in said polythiophene, R¹ and R² together form a - CH₂-CH₂- group.

5. A method according to any of claims 1 to 4 wherein said aprotic compound is selected from the group of lactams, amides, sulphones, sulphoxides, organic phosphates esters, organic phosphonates, organic phosphamides, urea, derivatives of urea and mixtures thereof.

6. A method according to any of claims 1 to 5, wherein said object is a polymeric film.

7. A method according to any of claims 1 to 5, wherein said object is a flexible glass/polymeric film laminate.

8. A method according to claim 6 or 7, wherein said polymeric conductive layer is further patterned so as to form an electrode pattern on said film.

9. Use of a patterned conductive layer according to claim 8 as transparent electrode in displays and electroluminescent devices.

10. An aqueous composition containing
- a polythiophene,
- a polyanion compound and
- an aprotic compound with dielectric constant, ε, ≥ 15 selected from the group consisting of sulphones, sulphoxides, organic phosphates esters, organic phosphonates, organic phosphamides, urea, derivatives of urea and mixtures thereof.

11. An aqueous composition according to claim 10, wherein said polythiophene has the following formula : 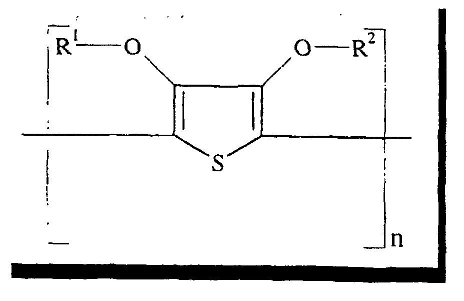 wherein each of R¹ and R² independently represents hydrogen or a C1-4 alkyl group or together represent an optionally substituted C1-4 alkylene group or a cycloalkylene group, preferably an ethylene group, an optionally alkyl-substituted methylene group, an optionally C1-12 alkyl- or phenyl-substituted 1,2-ethylene group, a 1,3-propylene group or a 1,2-cyclohexylene group.

## Patentansprüche

1. Ein durch die nachstehenden Schritte gekennzeichnetes Verfahren zur Herstellung einer polymeren leitfähigen Schicht auf einem Gegenstand :
- Bereitstellen einer wässrigen Zusammensetzung, enthaltend :
ein Polythiophen,
eine Polyanionverbindung und
eine protonenfreie Verbindung mit einer Dielektrizitätskonstante ε von ≥ 15,
- Auftrag der Zusammensetzung auf den Gegenstand zur Bildung einer Schicht und
- Trocknung der Schicht zur Bildung einer leitfähigen polymeren Schicht auf dem Gegenstand,
**dadurch gekennzeichnet, dass** der Gegenstand und die Schicht bei einer Temperatur unter 100°C gelagert werden und die leitfähige polymere Schicht einen elektrischen Widerstand von höchstens 2 kΩ/□.

2. Verfahren nach Anspruch 1, **dadurch gekennzeichnet, dass** das Polythiophen der folgenden Formel entspricht : 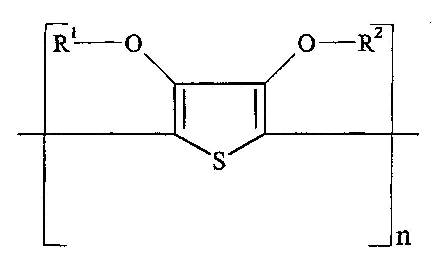 in der R¹ und R² unabhängig voneinander jeweils ein Wasserstoffatom oder eine C1-4-Alkylgruppe oder zusammen eine gegebenenfalls substituierte C1-4-Alkylengruppe oder eine Cycloalkylengruppe, vorzugsweise eine Ethylengruppe, eine gegebenenfalls durch Alkylgruppen substituierte Methylengruppe, eine gegebenenfalls durch C1-12-Alkylgruppen oder Phenylgruppen substituierte 1,2-Ethylengruppe, eine 1,3-Propylengruppe oder eine 1,2-Cyclohexylengruppe bedeuten.

3. Verfahren nach Anspruch 1 oder 2, **dadurch gekennzeichnet, dass** der Gegenstand und die Schicht bei einer Temperatur unter 50°C aufbewahrt werden.

4. Verfahren nach einem der Ansprüche 1 bis 3, **dadurch gekennzeichnet, dass** R¹ und R² zusammen eine CH₂-CH₂-Gruppe bilden.

5. Verfahren nach einem der Ansprüche 1 bis 4, **dadurch gekennzeichnet, dass** die protonenfreie Verbindung aus der Gruppe bestehend aus Lactamen, Amiden, Sulfonen, Sulfoxiden, organischen Phosphatestern, organischen Phosphonaten, organischen Phosphamiden, Harnstoff, Derivaten von Harnstoff und Gemischen derselben gewählt wird.

6. Verfahren nach einem der Ansprüche 1 bis 5, **dadurch gekennzeichnet, dass** der Gegenstand eine polymere Folie ist.

7. Verfahren nach einem der Ansprüche 1 bis 5, **dadurch gekennzeichnet, dass** der Gegenstand eine biegsame Verbundscheibe aus Glas und einer polymeren Folie ist.

8. Verfahren nach Anspruch 6 oder 7, **dadurch gekennzeichnet, dass** die polymere leitfähige Schicht ferner gemustert ist, wobei auf der Folie ein Elektrodenmuster erzeugt ist.

9. Verwendung einer gemusterten leitfähigen Schicht nach Anspruch 8 als transparente Elektrode in Bildschirmen und elektrolumineszierenden Einrichtungen.

10. Eine wässrige Zusammensetzung, enthaltend :
- ein Polythiophen,
- eine Polyanionverbindung und
- eine protonenfreie Verbindung mit einer Dielektrizitätskonstante ε von ≥ 15 aus der Gruppe bestehend aus Sulfonen, Sulfoxiden, organischen Phosphatestern, organischen Phosphonaten, organischen Phosphamiden, Harnstoff, Derivaten von Harnstoff und Gemischen derselben.

11. Eine wässrige Zusammensetzung nach Anspruch 10, **dadurch gekennzeichnet, dass** das Polythiophen der folgenden Formel entspricht : 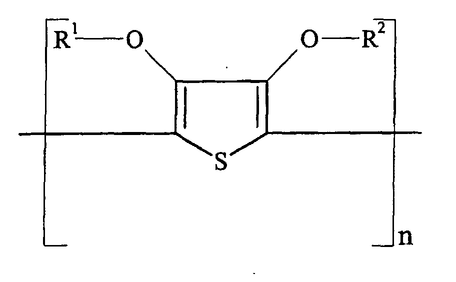 in der R¹ und R² unabhängig voneinander jeweils ein Wasserstoffatom oder eine C1-4-Alkylgruppe oder zusammen eine gegebenenfalls substituierte C1-4-Alkylengruppe oder eine Cycloalkylengruppe, vorzugsweise eine Ethylengruppe, eine gegebenenfalls durch Alkylgruppen substituierte Methylengruppe, eine gegebenenfalls durch C1-12-Alkylgruppen oder Phenylgruppen substituierte 1,2-Ethylengruppe, eine 1,3-Propylengruppe oder eine 1,2-Cyclohexylengruppe bedeuten

## Revendications

1. Procédé de production d'une couche conductrice polymère sur un objet, comprenant les étapes consistant à :
- procurer une composition aqueuse contenant
un polythiophène,
un composé polyanionique, et
un composé aprotique possédant une constante diélectrique, ε, ≥ 15 ;
- appliquer ladite composition sur ledit objet pour former une couche ; et
- sécher ladite couche pour obtenir une couche polymère conductrice sur ledit objet
**caractérisé en ce que** ledit objet et ladite couche sont maintenus à une température inférieure à 100 °C et ladite couche polymère conductrice possède une résistivité électrique maximale de 2 kΩ/carré.

2. Procédé selon la revendication 1, dans lequel ledit polythiophène répond à la formule ci-après : 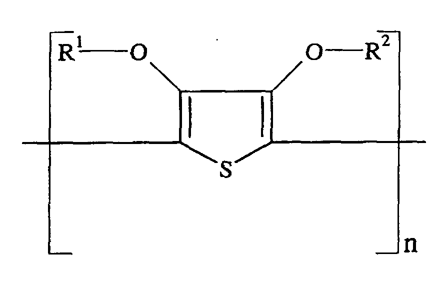 dans laquelle chacun des radicaux R¹ et R² représente, de manière indépendante, un atome d'hydrogène ou un groupe alkyle en C₁-C₄, ou bien les deux radicaux représentent ensemble un groupe alkylène en C₁-C₄, le cas échéant substitué, ou encore un groupe cycloalkylène, de préférence un groupe éthylène, un groupe méthylène portant, le cas échéant, un ou plusieurs substituants alkyle identiques ou différents, un groupe 1,2-éthylène portant le cas échéant un ou plusieurs substituants alkyle en C₁-C₁₂ identiques ou différents ou bien un ou plusieurs substituants phényle, un groupe 1,3-propylène ou un groupe 1,2-cyclohexylène.

3. Procédé selon la revendication 1 ou 2, dans lequel ledit objet et ladite couche sont maintenus à une température inférieure à 50 °C.

4. Procédé selon l'une quelconque des revendications 1 à 3, dans lequel, dans ledit polythiophène, les radicaux R¹ et R² forment ensemble un groupe -CH₂-CH₂-.

5. Procédé selon l'une quelconque des revendications 1 à 4, dans lequel ledit composé aprotique est choisi parmi le groupe comprenant des lactames, des amides, des sulfones, des sulfoxydes, des esters de phosphate organique, des phosphonates organiques, des phosphamides organiques, de l'urée, des dérivés d'urée, et leurs mélanges.

6. Procédé selon l'une quelconque des revendications 1 à 5, dans lequel ledit objet est un film polymère.

7. Procédé selon l'une quelconque des revendications 1 à 5, dans lequel ledit objet est un stratifié de verre flexible/film polymère.

8. Procédé selon la revendication 6 ou 7, dans lequel ladite couche polymère est en outre imprimée de façon à obtenir une impression d'électrode sur ledit film.

9. Utilisation d'une couche conductrice imprimée selon la revendication 8 à titre d'électrode transparente dans des afficheurs et des dispositifs électroluminescents.

10. Composition aqueuse contenant
- un polythiophène,
- un composé polyanionique, et
- un composé aprotique possédant une constante diélectrique, ε, ≥ 15 choisi parmi le groupe constitué par des lactames, des amides, des sulfones, des sulfoxydes, des esters de phosphate organique, des phosphonates organiques, des phosphamides organiques, de l'urée, des dérivés d'urée, et leurs mélanges.

11. Composition aqueuse selon la revendication 10, dans laquelle ledit polythiophène répond à la formule ci-après : 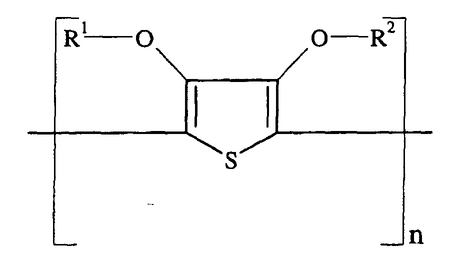 dans laquelle chacun des radicaux R¹ et R² représente, de manière indépendante, un atome d'hydrogène ou un groupe alkyle en C₁-C₄, ou bien les deux radicaux représentent ensemble un groupe alkylène en C₁-C₄, le cas échéant substitué, ou encore un groupe cycloalkylène, de préférence un groupe éthylène, un groupe méthylène portant, le cas échéant, un ou plusieurs substituants alkyle identiques ou différents, un groupe 1,2-éthylène portant le cas échéant un ou plusieurs substituants alkyle en C₁-C₁₂ identiques ou différents ou bien un ou plusieurs substituants phényle, un groupe 1,3-propylène ou un groupe 1,2-cyclohexylène.
